# EUROPÄISCHE PATENTSCHRIFT

(11) **EP 2 488 451 B1**
(45) Veröffentlichungstag und Bekanntmachung des Hinweises auf die Patenterteilung: **30.05.2018**
(21) Anmeldenummer: 10773572.2
(22) Anmeldetag: 14.10.2010
(51) Int. Cl.: H01M 4/136, H01M 4/58, H01M 4/02, C01B 25/45, H01M 10/0525, H01M 10/0562

(54) **PHASENREINES LITHIUMALUMINIUMTITANPHOSPHAT UND VERFAHREN ZUR HERSTELLUNG UND DESSEN VERWENDUNG**
PHASE-SHIFT-FREE LITHIUM ALUMINUM TITANIUM PHOSPHATE, AND METHOD FOR THE PRODUCTION THEREOF AND USE THEREOF
PHOSPHATE DE LITHIUM-ALUMINIUM-TITANE EXEMPT DE PHASES, SON PROCÉDÉ DE PRODUCTION ET SON UTILISATION

(30) Priorität: 16.10.2009 DE 102009049693
(43) Veröffentlichungstag der Anmeldung: 22.08.2012
(73) Patentinhaber: Johnson Matthey PLC, London EC4A 4AB (GB)
(72) Erfinder: HOLZAPFEL, Michael, 85354 Freising (DE); EISGRUBER, Max, 84079 Bruckberg (DE); NUSPL, Gerhard, 81543 München (DE)
(74) Vertreter: Gee, Rachel Sarah
(86) Internationale Anmeldenummer: PCT/EP2010/006300
(87) Internationale Veröffentlichungsnummer: WO 2011/045067

(56) Entgegenhaltungen:
- US-A- 4 985 317
- XIAN MING WU ET AL: "Synthesis of Li1.3Al0.3Ti1.7(PO4)3 by sol-gel technique", MATERIALS LETTERS, Bd. 58, Nr. 7-8, 27. Oktober 2003 (2003-10-27), Seiten 1227-1230, XP002617467, DOI: :10.1016/j.matlet.2003.09.013
- M. CRETIN, P. FABRY AND L. ABELLO: "Study of Li1+x AlxTi2-x (PO4)3 for Li+ potentiometric sensors", JOURNAL OF THE EUROPEAN CERAMIC SOCIETY, Bd. 15, Nr. 11, 22. Dezember 1999 (1999-12-22), Seiten 1149-1156, XP002617468, DOI: 10.1016/0955-2219(95)00079-A
- K. ARBI ET AL: "Lithium Mobility in Li1.2Ti1.8R0.2(PO4)3 Compounds (R = Al, Ga, Sc, In) as Followed by NMR and Impedance Spectroscopy", AMERICAN CHEMICAL SOCIETY, Bd. 16, Nr. 2, 25. Dezember 2003 (2003-12-25), Seiten 255-262, XP002617469, DOI: 10.1021/cm030422i
- K.ARBI ET AL: "Dependence of Ionic Conductivity on Composition of Fast Ionic Conductors Li1+xTi2-xAlxA Parallel NMR and Electric Impedance Study", CHEM. MATER., Bd. 14, Nr. 3, 28. Februar 2002 (2002-02-28), Seiten 1091-1097, XP002617470, DOI: 10.1021/cm010528i

## Beschreibung

Die vorliegende Erfindung betrifft phasenreines Lithiumaluminiumtitanphosphat, ein Verfahren zu dessen Herstellung, dessen Verwendung sowie eine Sekundärlithiumionenbatterie enthaltend das phasenreine Lithiumaluminiumtitanphosphat.

In letzter Zeit rückten batteriegetriebene Kraftfahrzeuge zunehmend in den Blickpunkt von Forschung und Entwicklung aufgrund des zunehmenden Mangels an fossilen Rohstoffen in naher Zukunft.

Dabei erwiesen sich insbesondere Lithium-Ionen-Akkumulatoren (auch als Sekundärlithiumionenbatterie bezeichnet) als die vielversprechendsten Batteriemodelle für derartige Anwendungen.

Diese sogenannten "Lithumionenbatterien" finden darüberhinaus in Bereichen wie Elektrowerkzeuge, Computer, Mobiltelefone usw. vielfältige Anwendungen. Insbesondere bestehen dabei die Kathoden und Elektrolyte, aber auch die Anoden aus lithiumhaltigen Materialien.

Als Kathodenmaterialien werden beispielsweise seit längeren LiMn₂O₄ und LiCoO₂ verwendet. Seit neuerem auch, insbesondere seit den Arbeiten von Goodenough et al. (US 5,910,382) dotierte oder nicht dotierte gemischte Lithiumübergangsmetallphosphate, insbesondere LiFePO₄.

Als Anodenmaterialien werden üblicherweise beispielsweise Graphit oder auch, wie schon vorstehend erwähnt Lithiumverbindungen wie Lithiumtitanate insbesondere für großvolumige Batterien verwendet.

Als Lithiumtitanate werden vorliegend die dotierten oder nicht dotierten Lithiumtitanspinelle vom Typ Li₁₊ₓTi₂₋ₓO₄ mit 0 ≤ x ≤ 1/3 der Raumgruppe Fd3m und sämtliche gemischten Titanoxide der generischen Formel LiₓTi_{y}O(0≤x,y≤1) verstanden.

Für den Elektrolyten in derartigen Lithium-Ionen-Akkumulatoren werden üblicherweise Lithiumsalze bzw. deren Lösungen verwendet.

Dabei wurden auch keramische Separatoren wie das beispielsweise von der Firma Evonik Degussa mittlerweile kommerziell erhältliche Separion® (DE 196 53 484 A1) vorgeschlagen. Separion enthält allerdings keinen Festkörperelektrolyten, sondern keramische Füllstoffe wie nanoskaliges Al₂O₃ und SiO₂.

Als feste Elektrolyte finden Lithiumtitanphosphate seit einiger Zeit Erwähnung (JP A 1990 2-225310). Lithiumtitanphosphate weisen je nach Struktur und Dotierung eine erhöhte Lithiumionenleitfähigkeit und eine geringe elektrische Leitfähigkeit auf, was sie auch aufgrund ihrer Härte zu sehr geeigneten Festelektrolyten in Sekundärlithiumionenbatterien prädestiniert.

Aono et al. haben die ionische (Lithium) Leitfähigkeit von dotierten und nicht dotierten Lithiumtitanphosphaten beschrieben (J. Electrochem. Soc., Vol. 137, Nr. 4, 1990, S. 1023 - 1027, J. Electrochem. Soc., Vol. 136, Nr. 2, 1989, S. 590 - 591).

Dabei wurden insbesondere mit Aluminium, Scandium, Yttrium und Lanthan dotierte Systeme untersucht. Es wurde dabei gefunden, dass insbesondere die Dotierung mit Aluminium gute Ergebnisse liefert, da Aluminium je nach Dotierungsgrad die höchste Lithiumionenleitfähigkeit verglichen mit anderen Dotierungsmetallen hervorbringt und aufgrund seines Kationenradius (kleiner als Ti⁴⁺) im Kristall die Plätze des Titans gut einnehmen kann.

Kosova et al. in Chemistry for Sustainable Development 13 (2005) 253 - 260 schlagen geeignete dotierte Lithiumtitanphosphate als Kathoden, Anoden und Elektrolyten für wiederaufladbare Lithiumionenbatterien vor.

Li_{1,3}Al_{0,3}Ti_{1,7}(PO₄) wurde in der EP 1 570 113 B1 als keramischer Füllstoff in einer "aktiven" Separatorfolie, die zusätzliche Lithium-Ionenleitfähigkeit aufweist, für elektrochemische Bauelemente vorgeschlagen.

Ebenso wurden weitere dotierte, insbesondere mit Eisen und Aluminium und Seltenen Erden dotierte Lithiumtitanphosphate im US 4,985,317 beschrieben.

Xian Ming Wu et al. ("Synthesis of Li1.3Al0.3Ti1.7(P04)3 by sol-gel technique", Materials Letters, Bd. 58, Nr. 7-8, 27. Oktober 2003 (2003-10-27), Seiten 1227-1230) offenbaren ein Sol-Gel-Verfahren zu Herstellung von möglichst phasenreinem Li_{1.3}Ti_{1.7}Al_{0.3}(P0₄)₃. Gemäß Xian Ming Wu et al. wird zu einer Lösung enthaltend eine Lithiumverbindung und eine Aluminiumverbindung PO(OC₄H₉)₄ und Ti(OC₄H₉)₄ gegeben. Durch Erhitzen der so erhaltenen Vorläuferlösung wird ein Gel erzeugt, das anschließend kalziniert wird.

M. Cretin, P. Fabry and L. Abello ("Study of Li1+xAlxTi2-x(P04)3 for Li+ Potentiometric Sensors", Journal of the European Ceramic Society, Bd. 15, Nr. 11, 22. Dezember 1999 (1999-12-22), Seiten 1149-1156) beschreiben die Herstellung von Lithiumaluminiumtitanphosphat mittels eines Sol-Gel-Prozesses, bei dem zu einer Lösung enthaltend Ti(OC₄H₉)₄ und eine Aluminiumverbindung eine Lösung enthaltend eine Lithiumverbindung und NH₄H₂PO₄ gegeben wird. Das sich bildende feine Pulver wird bei niedriger Temperatur getrocknet und anschließend kalziniert.

US 4,985,317 A beschreibt die Herstellung von Lithiumaluminiumtitanphosphat mittels einer Festkörpersynthese, gemäß der ein Gemisch der festen Ausgangsmaterialien kalziniert wird.

Allen vorgenannten Lithiumtitanphosphaten ist jedoch eine sehr aufwändige Herstellung mittels Festkörpersynthese ausgehend von festen Phosphaten gemein, bei der üblicherweise das erhaltene Lithiumtitanphosphat durch weitere Fremdphasen wie beispielsweise AlPO₄ bzw. TiP₂O₇ verunreinigt ist. Phasenreines Lithiumtitanphosphat bzw. phasenreines dotiertes Lithiumtitanphosphat war bislang nicht bekannt.

Aufgabe der vorliegenden Erfindung war es daher, phasenreines Lithiumaluminiumtitanphosphat zur Verfügung zu stellen, da dieses die Eigenschaft einer hohen Lithiumionenleitfähigkeit mit einer geringen elektrischen Leitfähigkeit verbindet. Insbesondere sollte phasenreines Lithiumaluminiumtitanphosphat eine noch bessere ionische Leitfähigkeit gegenüber Lithiumaluminiumtitanphosphat des Standes der Technik aufgrund des Fehlens von Fremdphasen aufweisen.

Diese Aufgabe wird gelöst durch ein Verfahren zur Herstellung von phasenreinem Lithiumaluminiumtitanphosphat der Formel Li₁₊ₓTi₂₋ₓAlₓ(PO₄)₃, wobei x ≤ 0, 4 ist und dessen Gehalt an magnetischen Metallen und Metallverbindungen der Elemente Fe, Cr und Ni ≤ 1 ppm beträgt.

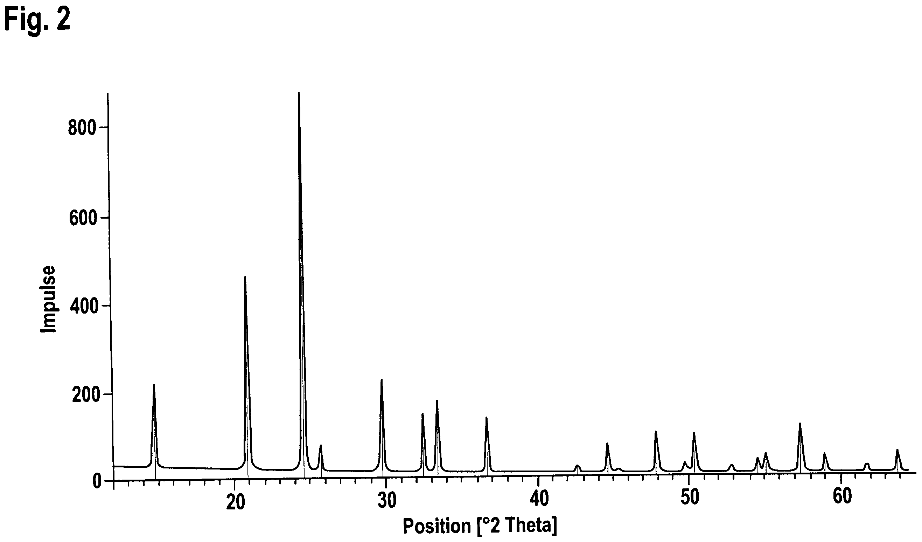

Der Begriff "phasenrein" wird vorliegend so verstanden, dass im Röntgenpulverdiffraktogramm (XRD)) keine Reflexe von Fremdphasen erkennbar sind. Das Fehlen von Fremdphasenreflexen im erfindungsgemäßen Lithiumaluminiumtitanphosphat wie es beispielhaft in der nachstehenden Figur 2 gezeigt ist, entspricht einem maximalen Anteil an Fremdphasen wie z.B. AlPO₄ und TiP₂O₇ von 1%.

Fremdphasen erniedrigen die intrinsische Ionenleitfähigkeit, so dass die erfindungsgemäß hergestellten phasenreinen Lithiumaluminiumtitanphosphate gegenüber denjenigen des Standes der Technik, die alle Fremdphasen enthalten, eine höhere intrinsische Leitfähigkeit als die Lithiumaluminiumtitanphosphate des Standes der Technik aufweisen.

Überraschenderweise wurde weiter gefunden, dass der Gesamtgehalt an magnetischen Metallen und Metallverbindungen von Fe, Cr und Ni (∑Fe+Cr+Ni) im erfindungsgemäß hergestellten Lithiumaluminiumtitanphosphat ≤ 1 ppm beträgt. Bei Lithiumaluminiumphosphaten des Standes der Technik (erhalten gemäß JP A 1990-2-225310) beträgt dieser Wert üblicherweise zwischen 2 und 3 ppm. Bei Mitberücksichtigung von ggf. störendem Zink ist die Gesamtmenge ∑ Fe+Cr+Ni+Zn = 1,1 ppm im erfindungsgemäßen Lithiumaluminiumtitanphosphat verglichen mit 2,3 - 3,3 ppm eines Lithiumaluminium-titanphosphats gemäß dem vorgenannten Stand der Technik.

Insbesondere weist das erfindungsgemäß hergestellte Lithiumaluminiumtitanphosphat nur eine äußerst geringe Verunreinigung an metallischem bzw. magnetischem Eisen und magnetischen Eisenverbindungen (wie z.B. Fe₃O₄) von < 0,5 ppm auf. Die Bestimmung der Konzentrationen an magnetischen Metallen bzw. Metallverbindungen ist nachstehend im experimentellen Teil im Detail beschrieben. Übliche Werte bei den bislang aus dem Stand der Technik bekannten Lithiumaluminiumtitanphosphaten für magnetisches Eisen bzw. magnetische Eisenverbindungen liegen bei ca. 1 - 1000 ppm. Die Verunreinigung mit metallischem Eisen bzw. magnetischen Eisenverbindungen führt dazu, dass sich neben Dendritenbildung verbunden mit Spannungsabfall die Gefahr von Kurzschlüssen innerhalb einer elektrochemischen Zelle, in der Lithiumaluminiumtitanphosphat als Festelektrolyt verwendet wird, bedeutend erhöht und somit ein Risiko für die technische Produktion derartiger Zellen darstellt. Mit dem wie vorliegend hergestellten phasenreinen Lithiumaluminiumtitan-phosphat kann dieser Nachteil vermieden werden.

Überraschenderweise weist das erfindungsgemäß hergestellte phasenreine Lithiumaluminiumtitanphosphat weiter eine relativ hohe BET-Oberfläche von < 4,5 m²/g auf. Typische Werte liegen beispielsweise bei 2,0 bis 3,5 m²/g. Aus der Literatur bekannte Lithiumaluminiumtitanphosphate weisen dahingegen BET-Oberflächen von kleiner 1,5 m²/g auf.

Bevorzugt weist das erfindungsgemäß hergestellte Lithiumaluminiumtitanphosphat eine Teilchengrößenverteilung von d₉₀ < 6 µm, d₅₀ < 2,1 µm und d₁₀ < 1µm auf, was dazu führt, dass die Mehrzahl der Teilchen besonders klein ist und damit eine besonders hohe Ionenleitfähigkeit erzielt wird. Dies bestätigt ähnliche Befunde aus der vorerwähnten japanischen Offenlegungsschrift, wo auch versucht wurde, mittels verschiedener Mahlvorgänge kleinere Teilchengrößen zu erhalten: Aufgrund der extremen Härte des Lithiumaluminiumtitanphosphats (Mohs-Härte > 7, das heißt, nahe bei Diamant) ist dies jedoch mit herkömmlichen Mahlverfahren schwierig zu erhalten.

In weiteren bevorzugten Ausführungsformen der vorliegenden Erfindung weist das hergestellte Lithiumaluminiumtitanphosphat die folgenden Summenformeln auf: Li_{1,2}Ti_{1,8}Al_{0,2}(PO₄)₃, das bei 293 K eine sehr gute Gesamtionenleitfähigkeit von ca. 5 x 10⁻⁴ S/cm aufweist und - in der besonders phasenreinen Form - Li_{1,3}Ti_{1,7}Al_{0,3}(PO₄)₃, das bei 293 K eine besonders hohe Gesamtionenleitfähigkeit von 7 x 10⁻⁴ S/cm aufweist.

Das erfindungsgemäße Verfahren zur Herstellung des phasenreinen Lithiumaluminiumtitanphosphats umfasst die folgenden Schritte:
a) das Bereitstellen einer flüssigen konzentrierten Phosphorsäure,
b) das Zugeben eines Gemisches aus einer Lithiumverbindung, Titandioxid und einer sauerstoffhaltigen Aluminiumverbindung,
c) das Erhitzen der Mischung um ein festes Zwischenprodukt zu erhalten,
d) das Kalzinieren des festen Zwischenproduktes.

Überraschenderweise wurde gefunden, dass im Gegensatz zu allen bisher bekannten Synthesen des Standes der Technik anstelle von festen Phosphorsäuresalzen auch eine flüssige Phosphorsäure verwendet werden kann. Das erfindungsgemäße Verfahren verläuft somit als definierte Fällung einer wässrigen Precursorsuspension ab. Die Verwendung einer Phosphorsäure ermöglicht eine leichtere Verfahrensführung und damit auch die Möglichkeit, Verunreinigungen schon in Lösung bzw. Suspension zu entfernen und somit auch phasenreinere Produkte zu erhalten.

Bevorzugt wird als flüssige konzentrierte Phosphorsäure wässrige konzentrierte Phosphorsäure und/oder eine konzentrierte ortho-Phosphorsäure, das heißt beispielsweise 85 %ige ortho-Phosphorsäure verwendet, obwohl in weniger bevorzugten weiteren Ausführungsformen der vorliegenden Erfindung auch andere konzentrierte Phosphorsäuren verwendet werden können, wie beispielsweise meta-Phosphorsäure etc. Auch alle Kondensationsprodukte der Orthophosphorsäure finden erfindungsgemäß Verwendung wie: kettenförmige Polyphosphorsäuren (Diphosphorsäure, Triphosphorsäure, Oligophosphorsäuren,...) ringförmige Metaphosphorsäuren (Tri-, Tetrametaphosphorsäure) bis hin zum Anhydrid der Phosphorsäure P₂O₅ (in Wasser).

Als Lithiumverbindung kann erfindungsgemäß jede geeignete Lithiumverbindung verwendet werden, wie Li₂CO₃, LiOH, Li₂O, LiNO₃, wobei Lithiumcarbonat besonders bevorzugt ist, da es die kostengünstigste Rohstoffquelle ist.

Als sauerstoffhaltige Aluminiumverbindung kann praktisch jedes Oxid oder Hydroxid oder gemischte Oxid/Hydroxid von Aluminium verwendet werden. Im Stand der Technik wird Aluminiumoxid Al₂O₃ aufgrund seiner leichten Verfügbarkeit bevorzugt eingesetzt. Vorliegend wurde jedoch gefunden, dass die besten Ergebnisse jedoch mit Al(OH)₃ erzielt werden. Al(OH)₃ ist verglichen mit Al₂O₃ noch kostengünstiger und auch insbesondere im Kalzinierschritt reaktiver als Al₂O₃. Natürlich kann Al₂O₃ ebenso im erfindungsgemäßen Verfahren, wenn auch weniger bevorzugt, eingesetzt werden; insbesondere dauert dann allerdings das Kalzinieren verglichen mit dem Einsatz von Al(OH)₃ länger.

Der Schritt des Erhitzens der Mischung wird erfindungsgemäß bei einer Temperatur von 200 bis 300 °C, bevorzugt 200 bis 260 °C und ganz besonders bevorzugt von 200 bis 240 °C durchgeführt. Damit ist eine schonende Umsetzung gewährleistet, die außerdem noch kontrolliert werden kann.

Das Kalzinieren erfolgt erfindungsgemäß bei Temperaturen von 830 - 1000 °C, besonders bevorzugt bei 880 - 900 °C, da bei unter 830 °C die Gefahr des Auftretens von Fremdphasen besonders groß ist.

Typischerweise erhöht sich bei Temperaturen >950°C der Dampfdruck des Lithiums in der Verbindung Li₁₊ₓTi₂₋ₓAlₓ(PO₄)₃, d.h. die gebildeten Verbindungen Li₁₊ₓTi₂₋ₓAlₓ(PO₄)₃ verlieren bei Temperaturen >950°C mehr und mehr Lithium, das sich unter Luftatmosphäre als Li₂O und Li₂CO₃ an den Ofenwänden abscheidet. Man kann dies z.B. durch den weiter unten beschriebenen Lithiumüberschuss ausgleichen, aber die exakte Einstellung der Stöchiometrie wird schwieriger. Daher sind niedrigere Temperaturen bevorzugt und durch die vorherige Verfahrensführung überraschenderweise gegenüber dem Stand der Technik auch möglich. Dieses Resultat kann dem Einsatz der wässrigen konzentrierten Phosphorsäure gegenüber festen Phosphaten des Standes der Technik zugeschrieben werden.

Außerdem stellen Temperaturen >1000°C erhöhte Anforderungen an Ofen- und Tiegelmaterial.

Das Kalzinieren wird über einen Zeitraum von 5 bis 10 Stunden durchgeführt. In weiteren noch mehr bevorzugten Ausführungsformen der vorliegenden Erfindung wird ein zweiter Kalzinierschritt bei der gleichen Temperatur und bevorzugt mit gleicher Dauer durchgeführt, wodurch ein besonders phasenreines Produkt erhalten wird.
In anderen bevorzugten Weiterbildungen der vorliegenden Erfindung wird ein stöchiometrischer Überschuss der Lithiumverbindung in Schritt b) verwendet. Lithiumverbindungen sind wie schon vorstehend gesagt bei den verwendeten Reaktionstemperaturen oft flüchtig, sodass hier je nach Lithiumverbindung oft mit einem Überschuss gearbeitet werden muss. Vorliegend wird dann bevorzugt ein stöchiometrischer Überschuss von ca. 8 % verwendet, was gegenüber den Festkörperverfahren des Standes der Technik eine Mengenreduktion an teurer Lithiumverbindung um ca. 50 % darstellt. Außerdem ist aufgrund der Verfahrensführung über einen wässrigen Fällprozess die Kontrolle der Stöchiometrie gegenüber einem Festkörperverfahren besonders erleichtert. Gegenstand der vorliegenden Erfindung ist ebenfalls ein phasenreines Lithiumaluminiumtitanphosphat gemäss Anspruch 7, das durch das erfindungsgemäße Verfahren erhältlich ist und durch die Verfahrensführung besonders phasenrein im Sinne der vorstehenden Definition erhalten werden kann und geringe Mengen an magnetischen Verunreinigungen aufweist, wie es schon vorstehend beschrieben wurde. Bislang bekannte Produkte erhältlich durch festkörpersynthetische Verfahren wiesen neben erhöhten Mengen an störenden magnetischen Verbindungen auch allesamt - wie schon vorstehend gesagt - weitere Fremdphasen auf, was vorstehend durch die erfindungsgemäße Verfahrensführung insbesondere durch den Einsatz einer (wässrigen), konzentrierten Phosphorsäure anstelle fester Phosphate vermieden werden kann.
Gegenstand der Erfindung ist ebenfalls die Verwendung des phasenreinen erfindungsgemäßen Lithiumaluminiumtitanphosphats als Festelektrolyt in einer Sekundärlithiumionenbatterie.
Die Aufgabe der Erfindung wird weiter gelöst durch die Bereitstellung einer verbesserten Sekundärlithiumionenbatterie, die das phasenreine erfindungsgemäße Lithiumaluminiumtitanphosphat enthält, insbesondere als Festelektrolyt. Der Festelektrolyt ist aufgrund seiner hohen Lithiumionenleitfähigkeit besonders geeignet und durch seine Phasenreinheit und geringen Eisengehalt besonders stabil und auch gegenüber Kurzschlüssen resistent.

In bevorzugten Weiterbildungen enthält die Kathode der erfindungsgemäßen Sekundärlithiumionenbatterie ein dotiertes oder nicht dotiertes Lithiumübergangsmetallphosphat als Kathode, wobei das Übergangsmetall des Lithiumübergangsmetallphosphats ausgewählt ist aus Fe, Co, Ni, Mn, Cr und Cu. Besonders bevorzugt ist dotiertes oder nicht dotiertes Lithiumeisenphosphat LiFePO₄.

In noch weiter bevorzugten Weiterbildungen enthält das Kathodenmaterial zusätzlich eine von dem verwendeten Lithiumübergangsmetallphosphat verschiedene dotierte oder nicht-dotierte gemischte Lithiumübergangsmetalloxoverbindung. Erfindungsgemäß geeignete Lithiumübergangsmetalloxoverbindungen sind z.B. LiMn₂O₄, LiNiO₂, LiCoO₂, NCA (LiNi_{1-x-y}CoₓAl_{y}O₂ z.B. LiNi_{0,8}Co_{0,15}Al_{0,05}O₂) oder NCM (LiNi_{1/3}Co_{1/3}Mn_{1/3}O₂). Der Anteil an Lithiumübergangsmetallphosphat in einer derartigen Kombination liegt im Bereich von 1 bis 60 Gew.-%. Bevorzugte Anteile sind z.B. 6-25 Gew.-%, bevorzugt 8-12 Gew.-% bei einer LiCoO₂/LiFePO₄ Mischung und 25-60 Gew.-% in einer LiNiO₂/LiFePO₄ Mischung.

In noch weiteren bevorzugten Weiterbildungen enthält das Anodenmaterial der erfindungsgemäßen Sekundärlithiumionenbatterie ein dotiertes oder nicht dotiertes Lithiumtitanat. In weniger bevorzugten Weiterbildungen enthält das Anodenmaterial ausschließlich Kohlenstoff, zum Beispiel Graphit etc. Das Lithiumtitanat in der vorstehend erwähnten bevorzugten Weiterbildung ist typischerweise dotiertes oder nicht dotiertes Li₄Ti₅O₁₂, sodass beispielsweise ein Potential von 2 Volt gegenüber der bevorzugten Kathode aus dotiertem oder nicht-dotiertem Lithiumübergangsmetallphosphat erzielt werden kann.
Wie schon vorstehend ausgeführt, sind sowohl die Lithiumübergangsmetallphosphate des Kathodenmaterials sowie die Lithiumtitanate des Anodenmaterials der bevorzugten Weiterbildung entweder dotiert oder nicht dotiert. Die Dotierung erfolgt mit mindestens einem weiteren Metall oder auch mit mehreren, was insbesondere zu einer erhöhten Stabilität und Zyklenbeständigkeit der dotierten Materialien bei Verwendung als Kathode bzw. Anode führt. Bevorzugt als Dotiermaterial sind Metallionen wie Al, B, Mg, Ga, Fe, Co, Sc, Y, Mn, Ni, Cr, V, Sb, Bi, Nb bzw. mehrere dieser Ionen, die in die Gitterstruktur des Kathoden- bzw. Anodenmaterials eingebaut werden können. Ganz besonders bevorzugt sind Mg, Nb und Al. Die Lithiumtitanate sind üblicherweise bevorzugt rutilfrei und damit ebenso phasenrein.

Die Dotierungsmetallkationen sind bei den vorgenannten Lithiumübergangsmetallphosphaten bzw. Lithiumtitanaten in einer Menge von 0,05 bis 3 Gew.-%, bevorzugt 1 bis 3 Gew.-% bezogen auf das gesamte gemischte Lithiumübergangsmetallphosphat bzw. Lithiumtitanat vorhanden. Bezogen auf das Übergangsmetall (Angabe in at%) bzw. im Falle der Lithiumtitanate, bezogen auf Lithium und/oder Titan beträgt die Menge an Dotierungsmetallkation(en) 20 at%, bevorzugt 5 - 10 at%.

Die Dotierungsmetallkationen belegen entweder die Gitterplätze des Metalls oder des Lithiums. Ausnahmen davon sind gemischte Fe, Co, Mn, Ni, Cr, Cu, Lithiumübergangsmetallphosphate, die mindestens zwei der vorgenannten Elemente enthalten, bei denen auch größere Mengen an Dotierungsmetallkationen vorhanden sein können, im Extremfall bis zu 50 Gew.-%.

Typische weitere Bestandteile einer Elektrode der erfindungsgemäßen Sekundärlithiumionenbatterie sind neben dem Aktivmaterial, das heißt dem Lithiumübergangsmetallphosphat bzw. dem Lithiumtitanat noch Leitruße sowie ein Binder.

Als Binder können hier dem Fachmann an sich bekannte Binder eingesetzt werden, wie beispielsweise Polytetrafluorethylen (PTFE), Polyvinylidendifluorid (PVDF), Polyvinylidendifluoridhexafluorpropylencopolymere (PVDF-HFP), Ethylenpropylendienterpolymere (EPDM), Tetrafluorethylen-Hexafluorpropylencopolymere, Polyethylenoxide (PEO), Polyacrylnitrile (PAN), Polyacrylmethacrylate (PMMA), Carboxymethylcellulosen (CMC), deren Derivate und Mischungen davon.

Typische Anteile der einzelnen Bestandteile des Elektrodenmaterials im Rahmen der vorliegenden Erfindung sind bevorzugt 80 bis 98 Gewichtsteile an Aktivmasse Elektrodenmaterial , 10 bis 1 Gewichtsteile Leitkohlenstoff und 10 bis 1 Gewichtsteile Binder. In der Sekundärlithiumionenbetterie sind beispielsweise bevorzugte Kathoden/Festelektrolyt/Anoden-Kombinationen LiFePO₄/Li_{1,3}Ti_{1,7}Al_{0,3}(PO₄)₃/LiₓTi_{y}O mit einer Einzelzellspannung von ca. 2 Volt, welche gut als Substitut für Bleisäurezellen geeignet ist oder LiCo_{z}Mn_{y}FeₓPO₄/Li_{1,3}Ti_{1,7}Al_{0,3}(PO₄)₃/LiₓTi_{y}O, wobei x, y, z wie weiter vorstehend definiert sind, mit erhöhter Zellspannung und verbesserter Energiedichte.
Die Erfindung ist nachstehend anhand von Abbildungen und Beispielen ausführlicher erläutert, die als nicht einschränkend für den Umfang der vorliegenden Erfindung verstanden werden sollen. Es zeigen:
- Fig. 1: die Struktur des erfindungsgemäßen phasenreinen Lithiumaluminiumtitanphosphats,
- Fig. 2: ein Röntgenpulverdiffraktogramm (XRD) eines erfindungsgemäßen Lithiumaluminiumtitanphosphats,
- Fig. 3: ein Röntgenpulverdiffraktogramm (XRD) eines herkömmlich hergestellten Lithiumaluminiumtitanphosphats,
- Fig. 4: die Partikelgrößenverteilung des erfindungsgemäßen Lithiumaluminiumtitanphosphats.

### 1. Messmethoden

Die Bestimmung der BET-Oberfläche erfolgte gemäß DIN 66131. (DIN-ISO 9277)

Die Bestimmung der Partikelgrößenverteilung erfolgte mittels Lasergranulometrie mit einem Malvern Mastersizer 2000 Gerät gemäß DIN 66133.

Die Messung des Röntgenpulverdiffraktogramms (XRD) erfolgte mit einem X'Pert PRO Diffraktometer, PANalytical: Goniometer Theta/Theta, Cu-Anode PW 3376 (max. Leistung 2.2kW), Detektor X'Celerator, X'Pert Software.

Der Gehalt an magnetischen Bestandteilen im erfindungsgemäßen Lithiumaluminiumtitanphosphat wird durch Separation mittels Magneten und anschließenden Säureaufschluss und mit nachfolgender Analyse über ICP der entstandenen Lösung bestimmt.

Das zu untersuchende Lithiumaluminiumtitanphosphatpulver wird in ethanolische Suspension mit einem Magneten einer definierten Größe (Durchmesser 1,7 cm, Länge 5,5 cm < 6000 Gauß) gebracht. Die ethanolische Suspension wird in einem Ultraschallbad mit einer Frequenz von 135 kHz über 30 Minuten dem Magneten ausgesetzt. Der Magnet zieht dabei die magnetischen Partikel aus der Suspension bzw. dem Pulver an. Anschließend wird der Magnet mit den magnetischen Partikeln aus der Suspension entfernt. Die magnetischen Verunreinigungen werden mithilfe eines Säureaufschlusses in Lösung gebracht und diese mittels ICP (Ionenchromatographie) Analyse untersucht, um die genaue Menge sowie die Zusammensetzung der magnetischen Verunreinigungen zu bestimmen. Das Gerät für die ICP-Analyse war ein ICP-EOS, Varian Vista Pro 720-ES.

### Beispiel 1:

### Herstellung von Li_{1,3}Al_{0,3}Ti_{1,7}(PO₄)₃

In einem Reaktionsgefäß wurden 1037,7 g ortho-Phosphorsäure (85 %) vorgelegt. Über eine Fluidrinne wurde langsam unter starkem Rühren mit einem teflonbeschichteten Ankerrührer ein Gemisch aus 144,3 g Li₂CO₃, 431,5 g TiO₂ (in Anatas-Form) und 46,8 g Al(OH₃) (Hydrargillit) zugegeben. Da das Li₂CO₃ mit der Phosphorsäure unter starkem Aufschäumen der Suspension durch Entstehen von CO₂ abreagierte, wurde die Zumischung sehr langsam über einem Zeitraum von 1 bis 1,5 Stunden zugegeben. Gegen Ende der Zugabe wurde die weiße Suspension viskoser, blieb jedoch tropffähig.

Anschließend wurde die Mischung in einem Ofen auf 225 °C aufgeheizt und zwei Stunden bei dieser Temperatur belassen. Es entsteht ein hartes krümeliges Rohprodukt, das sich aus dem Reaktionsgefäß teilweise nur schwer entfernen ließt. Die vollständige Erstarrung der Suspension vom flüssigen Zustand über eine gummiartige Konsistenz erfolgte relativ rasch. Anstelle eines Ofens kann jedoch auch z.B. ein Sand- oder Ölbad verwendet werden.

Anschließend wurde das Rohprodukt über einen Zeitraum von 6 Stunden fein vermahlen, um eine Partikelgröße < 50 µm zu erhalten.

Die fein gemahlene Vormischung wurde innerhalb von sechs Stunden von 200 auf 900 °C erhitzt, bei einem Aufheizintervall von 2 °C je Minute, da ansonsten kristalline Fremdphasen im Röntgenpulverdiffraktogramm (XRD) nachgewiesen werden können. Anschließend wurde das Produkt bei 900 °C für 24 Stunden gesintert und anschließend in einer Kugelmühle mit Porzellankugeln fein vermahlen. Die Gesamtmenge an magnetischem Fe, Cr und Ni bzw. deren magnetischen Verbindungen betrug 0,75 ppm. Die Gesamtmenge an Fe und dessen magnetischer Verbindungen betrug 0,25 ppm.

### Beispiel 2:

Die Synthese von Li_{1,3}Al_{0,3}Ti_{1,7}(PO₄)₃ erfolgte wie in Beispiel 1, jedoch wurde nach Ende der Zugabe der Mischung aus Lithiumcarbonat, TiO₂ und Al(OH)₃ die weiße Suspension in ein Gefäß mit Antihaftbeschichtung transferiert, beispielsweise in ein Gefäß mit Teflonwänden. Dadurch wurde die Entfernung des gehärteten Zwischenproduktes gegenüber Beispiel 1 deutlich erleichtert. Die Analysendaten entsprachen denjenigen aus Beispiel 1.

### Beispiel 3:

Die Synthese von Li_{1,3}Al_{0,3}Ti_{1,7}(PO₄)₃ wurde wie in Beispiel 2 durchgeführt, nur wurde vor dem Sintern das gemahlene Zwischenprodukt noch zu Pellets verpresst. Die Analysendaten entsprechen denjenigen aus Beispiel 1.

### Beispiel 4:

Die Synthese von Li_{1,3}Al_{0,3}Ti_{1,7}(PO₄)₃ erfolgt wie in Beispiel 2 bzw. 3, nur wurde sowohl bei den Pellets wie bei dem fein gemahlenen Zwischenprodukt eine erste Kalzinierung über 12 Stunden nach Abkühlen auf Raumtemperatur gefolgt von einer zweiten Kalzinierung über weitere 12 Stunden bei 900 °C durchgeführt. Bei letzterer wurden keine Anzeichen an Fremdphasen im Produkt gefunden. Die Gesamtmenge an magnetischen Fe, Cr und Ni bzw. deren magnetischen Verbindungen betrug 0,76 ppm. Die Menge an Fe und dessen magnetischer Verbindung betrug 0,24 ppm. Ein gemäß der JP A 1990 2-225310 hergestelltes Vergleichsbeispiel wies demgegenüber eine Menge ∑ Fe, Cr, Ni von 2,79 ppm auf und an magnetischen Eisen bzw. Eisenverbindungen von 1,52 ppm.

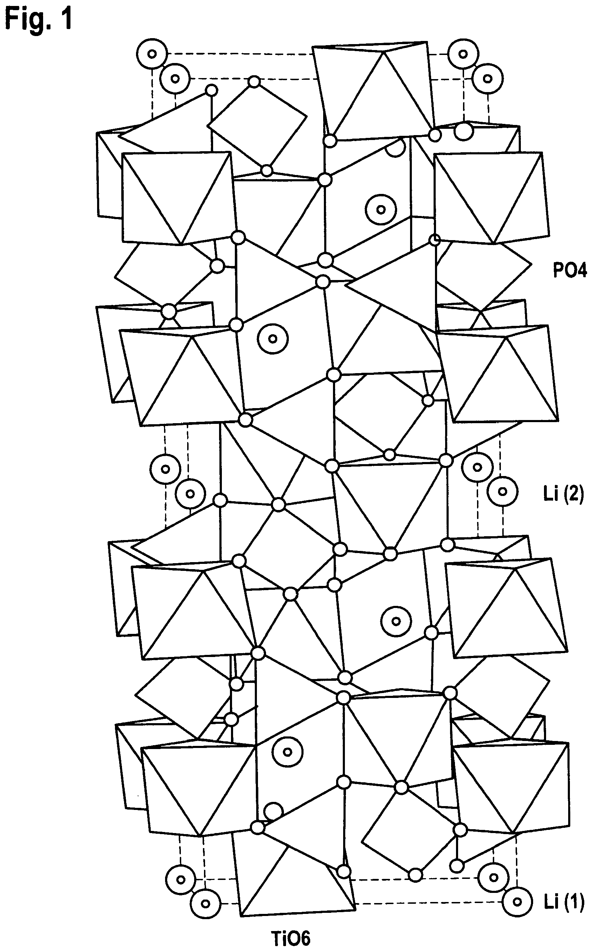

Die Struktur des erfindungsgemäß erhaltenen Produktes Li_{1,3}Al_{0,3}Ti_{1,7}(PO₄)₃ ist in Fig. 1 gezeigt und ist ähnlich einer sogenannten NASiCON (Na⁺ superionic conductor) Struktur (s. Nuspl et al. J. Appl. Phys. Vol. 06, Nr. 10, S. 5484 ff (1999)).

Die dreidimensionalen Li⁺-Kanäle der Kristallstruktur und eine gleichzeitig sehr niedrige Aktivierungsenergie von 0.30 eV für die Li-Migration in diesen Kanälen bewirken eine hohe intrinsische Li-Ionen Leitfähigkeit. Die Al-Dotierung beeinflusst diese intrinsische Li⁺-Leitfähigkeit kaum, sondern setzt die Li-Ionen-Leitfähigkeit an den Korngrenzen herab.

Neben Li₃ₓLa_{2/3-x}TiO₃-Verbindungen ist das Li_{1,3}Al_{0,3}Ti_{1.7}(PO₄)₃ der Festkörperelektrolyt mit der höchsten literaturbekannten Li⁺-Ionen Leitfähigkeit.

Wie aus dem Röntgenpulverdiffraktogramm (XRD) des Produktes aus Beispiel 4 in Figur 2 gesehen werden kann, entstehen durch die erfindungsgemäße Reaktionsführung besonders phasenreine Produkte.

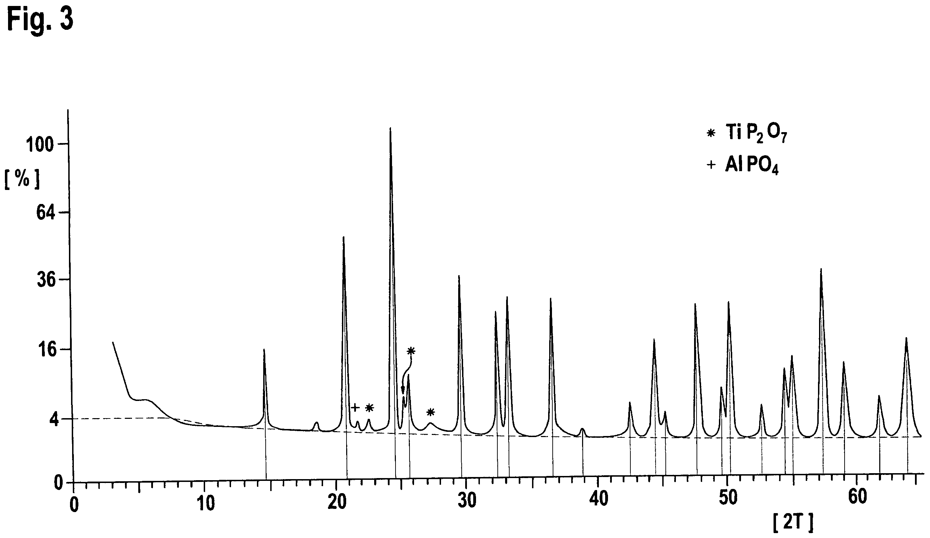

Figur 3 zeigt im Vergleich dazu ein Röntgenpulverdiffraktogramm eines Lithiumaluminiumtitanphosphats des Standes der Technik hergestellt gemäß der JP A 1990 2-225310 mit Fremdphasen wie TiP₂O₇ und AlPO₄. Die gleichen Fremdphasen finden sich auch in dem von Kosova et al. (vide supra) beschriebenen Material.

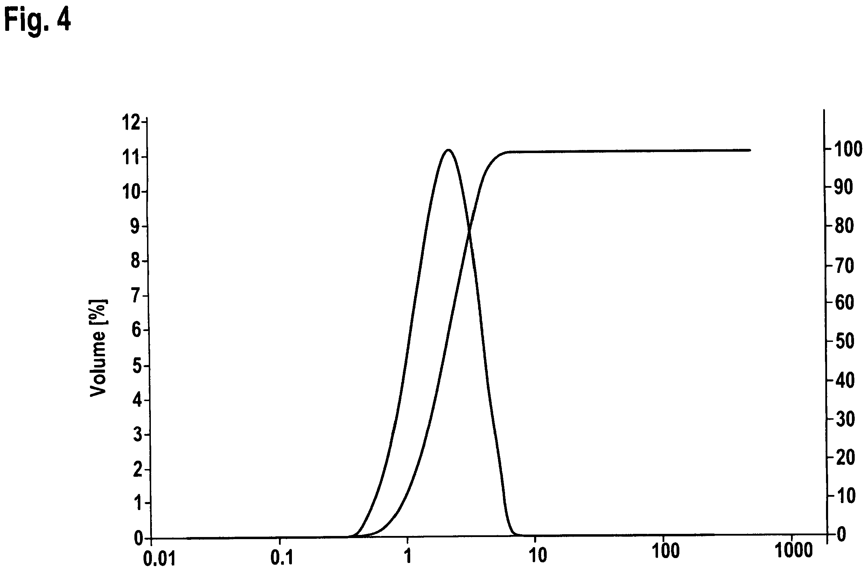

In Figur 4 ist die Partikelgrößenverteilung des Produkts aus Beispiel 4 gezeigt, das eine rein monomodale Partikelgrößenverteilung mit Werten für d₉₀ von < 6 µm, d₅₀ von < 2,1 µm und d₁₀ < 1 µm aufweist.

## Patentansprüche

1. Verfahren zur Herstellung von phasenreinem Lithiumaluminiumtitanphosphat der Formel Li₁₊ₓTi₂₋ₓAlₓ(PO₄)₃ mit Fremdphasen bis zu einem maximalen Anteil von 1%,wobei x ≤ 0,4 ist und dessen Gesamtgehalt an magnetischen Metallen und magnetischen Metallverbindungen der Elemente Fe, Cr, Ni ≤ 1 ppm beträgt, umfassend die Schritte des
a) Bereitstellens einer flüssigen konzentrierten Phosphorsäure
b) Zugebens eines Gemisches aus einer Lithiumverbindung, Titandioxid und einer sauerstoffhaltigen Aluminiumverbindung,
c) Erhitzens der Mischung bei einer Temperatur von 200 bis 300 °C, um ein festes Zwischenprodukt zu erhalten,
d) Kalzinierens des festen Zwischenprodukts bei Temperaturen von 830°C bis 1000°C.

2. Verfahren nach Anspruch 1, wobei als flüssige konzentrierte Phosphorsäure wässrige konzentrierte Phosphorsäure und/oder konzentrierte ortho-Phosphorsäure bzw. eine 85%-ige ortho-Phosphorsäure verwendet wird.

3. Verfahren nach Anspruch 1 oder 2, wobei als Lithiumverbindung Lithiumcarbonat verwendet wird.

4. Verfahren nach einem der Ansprüche 1 bis 3, wobei als sauerstoffhaltige Aluminiumverbindung Al(OH)₃ verwendet wird.

5. Verfahren nach einem der Ansprüche 1 bis 4, wobei das Kalzinieren bei 850 bis 950 °C erfolgt und über einen Zeitraum von 5 bis 24 Stunden durchgeführt wird.

6. Verfahren nach einem der vorangegangenen Ansprüche 1 bis 5, wobei in Schritt b) ein stöchiometrischer Überschuss an Lithiumverbindung verwendet wird.

7. Phasenreines Lithiumaluminiumtitanphosphat, erhältlich durch ein Verfahren nach einem der Ansprüche 1 bis 6, dessen Gehalt an metallischem Eisen und magnetischen Eisenverbindungen < 0,5 ppm beträgt, wobei der Wert für x 0,2 oder 0,3 beträgt.

8. Lithiumaluminiumtitanphosphat nach Anspruch 7, dessen Teilchengrößenverteilung d₉₀ < 6 µm beträgt.

9. Verwendung von phasenreinem Lithiumaluminiumtitan-phosphat nach Anspruch 7 oder 8 als Festelektrolyt in einer Sekundärlithiumionenbatterie.

10. Sekundärlithiumionenbatterie enthaltend phasenreines Lithiumaluminiumtitanphosphat nach Anspruch 7 oder 8.

11. Sekundärlithiumionenbatterie nach Anspruch 10, weiter enthaltend als Kathodenmaterial ein dotiertes oder nicht dotiertes Lithiumübergangsmetallphosphat, wobei das Übergangsmetall des Lithiumübergangsmetallphosphats ausgewählt ist aus Fe, Co, Ni, Mn, Cu, Cr, insbesondere Fe.

12. Sekundärlithiumionenbatterie nach Anspruch 10 oder 11, wobei das Anodenmaterial ein dotiertes oder nicht dotiertes Lithiumtitanat enthält.

## Claims

1. A method for producing a pure-phase lithium-aluminium-titanium phosphate of formula Li₁₊ₓTi₂₋ₓAlₓ(PO₄)₃ which contains foreign phases in a maximum proportion of up to 1%, wherein x is ≤ 0.4, and of which the total content of magnetic metals and magnetic metal compounds of the elements Fe, Cr or Ni amounts to ≤ 1 ppm, comprising the steps of:
a) providing a liquid concentrated phosphoric acid
b) adding a mixture of a lithium compound, titanium dioxide and an oxygen-containing aluminium compound,
c) heating the mixture at a temperature of 200 to 300°C in order to obtain a solid intermediate,
d) calcining the solid intermediate at temperatures of 830°C to 1000°C.

2. A method according to claim 1, wherein aqueous concentrated phosphoric acid and/or concentrated orthophosphoric acid or an 85% orthophosphoric acid is used as the liquid concentrated phosphoric acid.

3. A method according to claim 1 or 2, wherein lithium carbonate is used as the lithium compound.

4. A method according to one of claims 1 to 3, wherein Al(OH)₃ is used as the oxygen-containing aluminium compound.

5. A method according to one of claims 1 to 4, wherein calcination proceeds at 850 to 950°C and is carried out over a period of 5 to 24 hours.

6. A method according to one of preceding claims 1 to 5, wherein a stoichiometric excess of lithium compound is used in step b).

7. A pure-phase lithium-aluminium-titanium phosphate obtainable by a method according to one of claims 1 to 6, the metallic iron and magnetic iron compound content of which amounts to < 0.5 ppm, wherein the value of x amounts to 0.2 or 0.3.

8. A lithium-aluminium-titanium phosphate according to claim 7, the particle size distribution of which amounts to d₉₀ < 6 µm.

9. Use of a pure-phase lithium-aluminium-titanium phosphate according to claim 7 or 8 as a solid electrolyte in a secondary lithium ion battery.

10. A secondary lithium ion battery containing pure-phase lithium-aluminium-titanium phosphate according to claim 7 or 8.

11. A secondary lithium ion battery according to claim 10, further containing a doped or undoped lithium-transition metal phosphate as cathode material, wherein the transition metal of the lithium-transition metal phosphate is selected from Fe, Co, Ni, Mn, Cu or Cr, in particular Fe.

12. A secondary lithium ion battery according to claim 10 or 11, wherein the anode material contains a doped or undoped lithium titanate.

## Revendications

1. Procédé qui est destiné à préparer un phosphate de lithium-aluminium-titane à phase pure lequel répond à la formule Li₁₊ₓTi₂₋ₓAlₓ(PO₄)₃ comportant des phases étrangères dans une proportion maximale de 1 %, x étant ≤ 0,4, et lequel présente une teneur globale en métaux magnétiques et composés de métaux magnétiques des éléments Fe, Cr, Ni ≤ 1 ppm, et qui comprend les étapes consistant à
a) mettre à disposition un acide phosphorique concentré liquide
b) ajouter un mélange réalisé à partir d'un composé de lithium, de dioxyde de titane et d'un composé d'aluminium contenant de l'oxygène,
c) chauffer ledit mélange à une température comprise entre 200 et 300 °C afin d'obtenir un produit intermédiaire solide,
d) calciner ledit produit intermédiaire solide à des températures comprises entre 830 °C et 1 000 °C.

2. Procédé selon la revendication 1, ledit acide phosphorique concentré liquide mis en oeuvre étant de l'acide phosphorique concentré aqueux et/ou de l'acide ortho-phosphorique concentré ce qui correspond, le cas échéant, à de l'acide ortho-phosphorique à 85 %.

3. Procédé selon les revendications 1 ou 2, ledit composé de lithium mis en oeuvre étant du carbonate de lithium.

4. Procédé selon l'une des revendications 1 à 3, ledit composé d'aluminium contenant de l'oxygène mis en oeuvre étant du Al(OH)₃.

5. Procédé selon l'une des revendications 1 à 4, ladite calcination étant réalisée entre 850 à 950 °C et pendant une période comprise entre 5 et 24 heures.

6. Procédé selon l'une des revendications précédentes 1 à 5, ledit composé de lithium étant mis en oeuvre, à l'étape b), dans une proportion stoechiométrique excédentaire.

7. Phosphate de lithium-aluminium-titane à phase pure qui peut être obtenu par un procédé selon l'une des revendications 1 à 6 et qui présente une teneur en fer métallique et composés de fer magnétiques < 0,5 ppm, la valeur x étant égale à 0,2 ou 0,3.

8. Phosphate de lithium-aluminium-titane selon la revendication 7, présentant une distribution granulométrique d₉₀ < 6 µm.

9. Utilisation d'un phosphate de lithium-aluminium-titane à phase pure selon les revendications 7 ou 8 en tant qu'électrolyte solide dans un accumulateur lithium-ion.

10. Accumulateur lithium-ion, contenant du phosphate de lithium-aluminium-titane à phase pure selon les revendications 7 ou 8.

11. Accumulateur lithium-ion selon la revendication 10, contenant en outre, en tant que matériau de cathode, un phosphate de lithium-métal-de transition dopé ou non-dopé, le métal de transition dudit phosphate de lithium-métal-de transition étant choisi parmi Fe, Co, Ni, Mn, Cu, Cr, s'agissant notamment de Fe.

12. Accumulateur lithium-ion selon les revendications 10 ou 11, le matériau d'anode contenant du titanate de lithium dopé ou non-dopé.
